# EUROPÄISCHE PATENTSCHRIFT

(11) **EP 3 686 979 B1**
(45) Veröffentlichungstag und Bekanntmachung des Hinweises auf die Patenterteilung: **30.08.2023**
(21) Anmeldenummer: 20152771.0
(22) Anmeldetag: 21.01.2020
(51) Int. Cl.: H01M 8/04014, C25B 1/04, H01M 8/04119, H01M 8/0656, H01M 16/00

(54) **BRENNSTOFFZELLENANORDNUNG MIT WIRBELROHR, BRENNSTOFFZELLENSYSTEM UND FAHRZEUG MIT EINER BRENNSTOFFZELLENANORDNUNG**
FUEL CELL ARRANGEMENT WITH A FLUIDIZED TUBE, FUEL CELL SYSTEM AND VEHICLE COMPRISING A FUEL CELL ARRANGEMENT
AGENCEMENT DE PILE À COMBUSTIBLE POURVU DE TUBE À TOURBILLON, SYSTÈME DE PILE À COMBUSTIBLE ET VÉHICULE DOTÉ D'UN AGENCEMENT DE PILE À COMBUSTIBLE

(30) Priorität: 25.01.2019 DE 102019101884
(43) Veröffentlichungstag der Anmeldung: 29.07.2020
(73) Patentinhaber: Airbus Operations GmbH, 21129 Hamburg (DE)
(72) Erfinder: Barnaby, Law, 21129 Hamburg (DE)
(74) Vertreter: Schornack, Oliver

(56) Entgegenhaltungen:
- JP-A- 2001 026 401
- JP-A- 2007 280 794
- KR-A- 20090 015 273
- US-A1- 2013 302 706

## Beschreibung

Die Erfindung betrifft eine Brennstoffzellenanordnung mit Brennstoffzelle und einem Wirbelrohr. Insbesondere betrifft die Erfindung eine Brennstoffzellenanordnung, bei der der Brennstoff oder das Oxidationsmittel durch ein Wirbelrohr strömt, wobei der Brennstoff bzw. das Oxidationsmittel in einen erwärmten Anteil und einen gekühlten Anteil aufgeteilt wird. Ferner betrifft die Erfindung ein Brennstoffzellensystem mit solch einer Brennstoffzellenanordnung und ein Fahrzeug mit einem Brennstoffzellensystem oder Brennstoffzellenanordnung.

Für den Betrieb einer Brennstoffzelle wird/werden Brennstoff und/oder ein Oxidationsmittel meist in Tanks und unter erhöhtem Druck vorgehalten. Für den Betrieb der Brennstoffzelle wird der Brennstoff und/oder das Oxidationsmittel auf einen für die Brennstoffzelle geeigneten Druck reduziert und der Brennstoffzelle zugeführt. Da für die chemische Reaktion in der Brennstoffzelle immer ausreichend Brennstoff und Oxidationsmittel vorhanden sein müssen, wird mehr Brennstoff und Oxidationsmittel der Brennstoffzelle zugeführt, als für die chemische Reaktion notwendig ist, sodass in einem jeweiligen Rezirkulationskreislauf der Brennstoff und das Oxidationsmittel der Brennstoffzelle zurückgeführt werden.

Die KR 10-2009-0015273 A zeigt eine mit Luft betriebene Brennstoffzelle. Die benötigte Luft wird von einem Kompressor bereitgestellt und durch ein Wirbelrohr in einen kalten und warmen Luftstrom aufgeteilt, wobei der warme Luftstrom der Brennstoffzelle zugeführt wird. Die US 2013/302706 A1 zeigt eine Vorrichtung zur Erzeugung eines Brennstoffgases und eines Oxidationsgases, wobei eines der Gase entfeuchtet wird, bevor es gespeichert wird. In einem weiteren Betriebszustand kann in dem Entfeuchter das Gas vor Zuführung in eine Brennstoffzelle mit Feuchtigkeit angereichert werden.

Der Erfindung liegt die Aufgabe zugrunde, eine Brennstoffzellenanordnung zu verbessern und durch einfache Mittel effizienter zu gestalten.

Diese Aufgabe wird durch eine Brennstoffzellenanordnung mit den Merkmalen des Anspruchs 1, ein Brennstoffzellensystem mit den Merkmalen des Anspruchs 8 und ein Fahrzeug mit den Merkmalen des Anspruchs 9 gelöst.

Gemäß einem Aspekt zum besseren Verständnis der vorliegenden Offenbarung umfasst eine Brennstoffzellenanordnung eine Brennstoffzelle mit einem ersten Einlass für einen Brennstoff und einen zweiten Einlass für ein Oxidationsmittel, einen ersten Tank für den Brennstoff und ferner ein Wirbelrohr mit einem Einlass, einem ersten Auslass für erwärmtes Gas und einem zweiten Auslass für gekühltes Gas. Dabei ist der Einlass des Wirbelrohrs mit dem ersten Tank fluidisch verbunden und der erste Auslass des Wirbelrohrs ist mit dem ersten Einlass der Brennstoffzelle fluidisch verbunden.

Die Verwendung eines Wirbelrohrs in der Zuleitung des Brennstoffs für den Betrieb der Brennstoffzelle ermöglicht eine Erwärmung des Brennstoffs bzw. des Oxidationsmittels auf die für den Betrieb der Brennstoffzelle notwendige Temperatur mit einfachen Mitteln. Ein Wirbelrohr trennt ein in den Einlass des Wirbelrohrs einströmendes Gas in einen erwärmten Gasstrom und einen abgekühlten Gasstrom, wobei das Wirbelrohr sehr einfach aufgebaut sein kann. So kann die Trennung der Gasströme im einfachsten Fall mit einem Wirbelrohr ohne bewegliche Teile (Wirbelrohr mit fester Geometrie) erfolgen. Dadurch beruht die Erwärmung des Brennstoffs für die Brennstoffzellenanordnung auf einer einfach gestalteten Komponente und ist daher wartungsfrei, was einen kontinuierlichen Betrieb ermöglicht. Ferner lässt sich durch das Wirbelrohr der Druck des Brennstoffs auf den für den Betrieb der Brennstoffzelle notwendigen Druck einstellen. Daher ist insbesondere bei der Vorhaltung des Brennstoffs unter erhöhtem Druck (einem Druck höher als der Betriebsdruck in der Brennstoffzelle) mit einem Wirbelrohr ebenfalls wartungsfrei möglich.

In einer Ausgestaltungsvariante kann die Brennstoffzellenanordnung ferner einen zweiten Tank für das Oxidationsmittel umfassen. Insbesondere ist der Brennstoff in dem ersten Tank bzw. das Oxidationsmittel in dem zweiten Tank unter erhöhtem Druck gelagert, wodurch der Betrieb der Brennstoffzelle über einen vorgegebenen Zeitraum möglich ist, ohne weiteren Brennstoff bzw. Oxidationsmittel zu benötigen. Alternativ kann das Oxidationsmittel auch durch eine Fördereinrichtung (beispielsweise eine Pumpe, Kompressor, Lüfter, etc.) der Brennstoffzelle zugeführt werden, falls keine Bevorratung in einem gesonderten Tank notwendig ist (wie dies in einer Umgebung mit natürlicher Atmosphäre der Fall ist).

Ferner kann die Brennstoffzellenanordnung ein zweites Wirbelrohr aufweisen, dessen Einlass mit dem zweiten Tank fluidisch verbunden ist und der Einlass des zweiten Wirbelrohrs kann mit dem zweiten Tank fluidisch verbunden sein. Mit anderen Worten wird. das Oxidationsmittel aus dem zweiten Tank in das zweite Wirbelrohr und weiter über den ersten Auslass des zweiten Wirbelrohrs für erwärmtes Gas in die Brennstoffzelle geführt. Dadurch lassen sich beide Gase (Brennstoff und Oxidationsmittel) über ein jeweiliges Wirbelrohr im Druck mindern und in der Temperatur erhöhen. Auch kann ein Wirbelrohr bei der Zuführung des Oxidationsmittels ohne Tank, aber mit Fördereinrichtung, eingesetzt werden.

In jedem Fall kann das jeweilige Wirbelrohr in einer entsprechenden Variante so ausgestaltet sein, beispielsweise so dimensioniert sein, dass an dem ersten Auslass für erwärmtes Gas der Brennstoff bzw. das Oxidationsmittel mit dem/der für den Betrieb der Brennstoffzelle optimalen Druck und Temperatur ausströmt. Beispielsweise kann das an dem ersten Auslass des Wirbelrohrs ausströmende Gas eine Temperatur von 30 bis 70 °C, vorzugsweise von 40 bis 60 °C, und besonders bevorzugt 50 °C aufweisen. Aus dem zweiten Auslass des Wirbelrohrs strömt abgekühltes Gas (beispielsweise abgekühlter Brennstoff oder abgekühltes Oxidationsmittel). Die Temperatur des an dem zweiten Auslass des Wirbelrohrs ausströmenden Gases kann beispielsweise eine Temperatur von +10 bis -30 °C, vorzugsweise von 0 bis -20 °C, und besonders bevorzugt -10 °C aufweisen.

Optional können die Dimensionen des Wirbelrohrs oder zumindest Teile davon variabel eingestellt werden. So kann beispielsweise am Einlass, am ersten Auslass und/oder am zweiten Auslass ein Ventil vorgesehen sein, welches die Durchflussmenge, den Durchflussquerschnitt o. ä. einstellbar macht. Auch kann optional die Länge des Wirbelrohrs einstellbar sein, wodurch Druck und Temperatur beeinflusst werden können. Eine Längenänderung kann beispielsweise mittels zweier konzentrisch angeordneter und gegenseitig verschiebbarer Rohre oder einem flexiblen Rohr oder Leitung erzielt werden.

In einer weiteren Ausgestaltungsvariante kann die Brennstoffzellenanordnung ferner einen Wärmetauscher mit einem ersten Einlass, der mit dem zweiten Auslass des Wirbelrohrs fluidisch verbunden ist, und einen zweiten Einlass für ein Fluid umfassen. Dabei kann der Wärmetauscher dazu eingerichtet sein, das über den ersten Einlass einströmende (durch das Wirbelrohr abgekühlte) Gas mit dem über den zweiten Einlass einströmenden Fluid thermisch zu koppeln. Mit anderen Worten dient das durch das Wirbelrohr abgekühlte Gas als Wärmesenke für das über den zweiten Einlass des Wärmetauschers einströmende Fluid.

In einer anderen Ausgestaltungsvariante kann der Wärmetauscher einen ersten Auslass aufweisen, aus dem das über den ersten Einlass einströmende und mit dem Fluid thermisch gekoppelte Gas austritt. Das aus dem ersten Auslass austretende/ausströmende Gas kann aufgrund der thermischen Kopplung mit dem Fluid erwärmt worden sein, weist also eine höhere Temperatur auf als an dem ersten Einlass des Wärmetauschers. Ferner kann der erste Auslass des Wärmetauschers mit einer von dem ersten Auslass des Wirbelrohrs zu der Brennstoffzelle führenden Leitung fluidisch verbunden sein. Mit anderen Worten wird der Brennstoff oder das Oxidationsmittel nach Abkühlung durch das Wirbelrohr und (gegebenenfalls) anschließender Erwärmung in dem Wärmetauscher wieder dem Brennstoffstrom bzw. Oxidationsmittelstrom, welcher durch das Wirbelrohr erwärmt wurde, zugeführt.

Optional können die Dimensionen des Wirbelrohrs oder zumindest Teile davon so festgelegt oder (mittels Ventil und/oder Längenänderung) variabel eingestellt sein, dass der gemischte Brennstoffstrom bzw. Oxidationsmittelstrom eine Temperatur aufweist, die zum Betrieb der Brennstoffzelle optimal ist. Hierbei kann eine durchschnittliche Wärmemenge, die im Wärmetauscher von dem Brennstoff bzw. Oxidationsmittel aufgenommen wird, angenommen werden. Alternativ kann die aufgenommene Wärmemenge auch gemessen werden und das Wirbelrohr entsprechend eingestellt werden. Hierfür können Servomotoren an einem oder mehreren Ventilen des Wirbelrohrs und/oder anderen Verstellkörpern des Wirbelrohrs vorgesehen werden.

In einer Ausgestaltungsvariante kann der zweite Einlass des Wärmetauschers mit einem ersten Auslass der Brennstoffzelle für überschüssigen Brennstoff fluidisch verbunden sein. Mit anderen Worten wird der überschüssige Brennstoff, der die Brennstoffzelle verlässt, in dem Wärmetauscher abgekühlt. Alternativ kann der zweite Einlass des Wärmetauschers mit einem zweiten Auslass der Brennstoffzelle für überschüssiges Oxidationsmittel fluidisch verbunden sein. Somit lässt sich eine Abkühlung des überschüssigen Oxidationsmittels erzielen.

In noch einer weiteren Ausgestaltungsvariante kann die Brennstoffzellenanordnung einen Wasserabscheider aufweisen, der dazu eingerichtet ist, Wasser aus dem über den zweiten Einlass des Wärmetauschers einströmenden überschüssigen Brennstoff oder überschüssigen Oxidationsmittel abzuscheiden. Der Wasserabscheider kann dabei durch das von dem Wirbelrohr gekühlte, über den ersten Einlass des Wärmetauschers einströmende Gas betrieben werden (beispielsweise gekühlt werden um Wasser aus dem überschüssigen Brennstoff bzw. Oxidationsmittel zu kondensieren).

Ferner kann die Brennstoffzellenanordnung einen Wassertank umfassen, der dazu eingerichtet ist, von dem Wasserabscheider abgeschiedenes Wasser zu sammeln. Das so gesammelte Wasser kann für weitere Prozessabläufe wiederverwendet werden. Beispielsweise kann bei einer regenerativen Brennstoffzellenanordnung das Wasser mittels Elektrolyse wieder in Brennstoff und Oxidationsmittel getrennt werden und erneut in der Brennstoffzellenanordnung verwendet werden.

In einer anderen Ausgestaltungsvariante kann der zweite Einlass des Wärmetauschers mit einer Kühlanordnung der Brennstoffzelle fluidisch verbunden sein. Da bei der Erzeugung elektrischen Stroms in der Brennstoffzelle Abwärme anfällt, muss die Brennstoffzelle gekühlt werden. Hierfür kann eine Kühlanordnung, beispielsweise in Form eines oder mehrerer Wärmetauscher, vorgesehen sein, wobei die Kühlanordnung ein Kühlmittel umfasst, welches Wärmeenergie von der Brennstoffzelle aufnimmt. Die von der Kühlanordnung aufgenommene Wärmeenergie kann in dem Wärmetauscher der Brennstoffzellenanordnung an das von dem Wirbelrohr gekühlte Gas abgeben, dieses Gas also als Wärmesenke verwenden.

Gemäß einem weiteren Aspekt umfasst ein regeneratives Brennstoffzellensystem eine Brennstoffzellenanordnung gemäß dem ersten Aspekt oder einer der beschriebenen Ausgestaltungsvarianten. Ferner umfasst das Brennstoffzellensystem eine Wassersammelanordnung, die dazu eingerichtet ist, das bei der Energiegewinnung (Erzeugung elektrischen Stroms) in der Brennstoffzelle der Brennstoffzellenanordnung anfallende Wasser zu sammeln. Da in den meisten Brennstoffzellen Wasserstoff mit Sauerstoff reagiert, fällt Wasser bei der Erzeugung der Energie in der Brennstoffzelle an, welches abgeführt werden muss. In einem regenerativen Brennstoffzellensystem wird dieses Wasser durch die Wassersammelanordnung aufgefangen, um wiederverwendet zu werden.

Daher kann das Brennstoffzellensystem ferner einen Elektrolyseur umfassen, der dazu eingerichtet ist, eine Elektrolyse des durch die Wassersammelanordnung gesammelten Wassers mittels elektrischen Stroms durchzuführen. Beispielsweise kann an anderer Stelle gewonnener oder gespeicherter Strom dem Elektrolyseur zugeführt werden, um die Elektrolyse zu betreiben. Der dabei durch die Elektrolyse gewonnene Wasserstoff und Sauerstoff kann anschließend der Brennstoffzellenanordnung zugeführt werden. Alternativ oder zusätzlich kann der gewonnene Wasserstoff und Sauerstoff gespeichert werden, um zu einem späteren Zeitpunkt der Brennstoffzellenanordnung als Brennstoff und Oxidationsmittel zugeführt zu werden.

Gemäß noch einem weiteren Aspekt umfasst ein Fahrzeug mindestens eine Brennstoffzellenanordnung gemäß dem ersten Aspekt. Alternativ oder zusätzlich kann das Fahrzeug auch mindestens ein regeneratives Brennstoffzellensystem gemäß dem zweiten Aspekt umfassen.

Bei dem Fahrzeug kann es sich um ein Straßenfahrzeug, Luftfahrzeug, Raumfahrzeug oder einen Satelliten handeln. Insbesondere im Fall eines Satelliten kann ein regeneratives Brennstoffzellensystem vorgesehen werden, welches über Solarzellen regenerativen Strom erzeugt, um einen Elektrolyseur zu betreiben. Dadurch kann ein geschlossenes Brennstoffzellensystem mit geschlossenem Wasserkreislauf für eine (nahezu) unbegrenzte Betriebsdauer der Brennstoffzellenanordnung geschaffen werden.

Die oben beschriebenen Aspekte, Ausgestaltungen und Varianten können selbstverständlich kombiniert werden, ohne dass dies explizit beschrieben ist. Die vorliegende Offenbarung ist somit nicht auf die einzelnen Ausgestaltungen und Ausgestaltungsvarianten in der beschriebenen Reihenfolge oder einer bestimmten Kombination der Ausgestaltungsvarianten beschränkt.

Eine bevorzugte Ausführungsform der Erfindung wird nun anhand der beigefügten schematischen Zeichnung näher erläutert, wobei
Figur 1 schematisch ein regeneratives Brennstoffzellensystem zeigt,
Figur 2 schematisch einen Längsschnitt durch ein Wirbelrohr zeigt,
Figur 3 schematisch eine Brennstoffzellenanordnung mit Kühlung eines Rezirkulationsgases zeigt,
Figur 4 schematisch eine weitere Brennstoffzellenanordnung mit Kühlung eines Rezirkulationsgases zeigt,
Figur 5 schematisch eine weitere Brennstoffzellenanordnung mit Kühlung der Brennstoffzelle zeigt, und
Figur 6 schematisch ein Fahrzeug mit Brennstoffzellenanordnung zeigt.

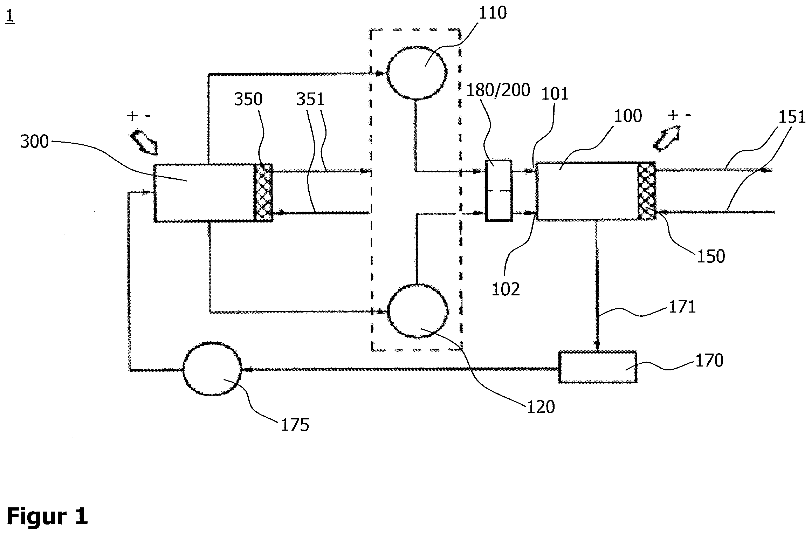

In Figur 1 wird schematisch ein regeneratives Brennstoffzellensystem 1 gezeigt. Das Brennstoffzellensystem 1 umfasst eine Brennstoffzelle 100, die über einen ersten Einlass 101 mit Brennstoff und über einen zweiten Einlass 102 mit Oxidationsmittel gespeist wird. Als Ergebnis erzeugt die Brennstoffzelle 100 Strom (+-) an einer Anode und Katode (nicht dargestellt) sowie Wasser, was über eine Pumpe 170 durch eine zugehörige Leitung 171 in einen Sammelbehälter 175 abgeführt wird. Die bei dem Betrieb der Brennstoffzelle 100 anfallende Abwärme, wird über eine Kühleinrichtung 150 aufgenommen und über einen Kühlkreislauf 151 an eine Wärmesenke (nicht gesondert dargestellt) abgeleitet.

Der Brennstoff kann in einem zugehörigen Tank 110 gelagert werden. Entsprechend kann das Oxidationsmittel in einem Tank 120 gespeichert sein. In einem herkömmlichen Brennstoffzellensystem 1 wird der Brennstoff üblicherweise über einen Druckregulierer 180 dem ersten Einlass 101 der Brennstoffzelle 100 zugeführt. Auch das Oxidationsmittel kann über einen ebenfalls optionalen Druckregulierer 180 dem zweiten Einlass 102 der Brennstoffzelle 100 zugeführt werden. Anstatt des Druckregulierers 180 wird ein Wirbelrohr 200 in dem Brennstoffzellensystem 1 verwendet, wie noch näher erläutert wird.

In dem regenerativen Brennstoffzellensystem 1 wird das in dem Sammelbehälter 175 aufgefangene Wasser in einem Elektrolyseur 300 wieder in Brennstoff (Wasserstoff) und Oxidationsmittel (Sauerstoff) zerlegt und in die entsprechenden Tanks 110 bzw. 120 geleitet. Der Elektrolyseur 300 wird mit elektrischem Strom versorgt, um die Elektrolyse durchzuführen. Dieser Strom kann beispielsweise von Solarzellen oder einer anderen Energiequelle stammen. Schließlich wird auch der Elektrolyseur 300 über eine zugehörige Kühleinrichtung 350 gekühlt, welche wiederum an einem Kühlkreislauf 351 angeschlossen ist.

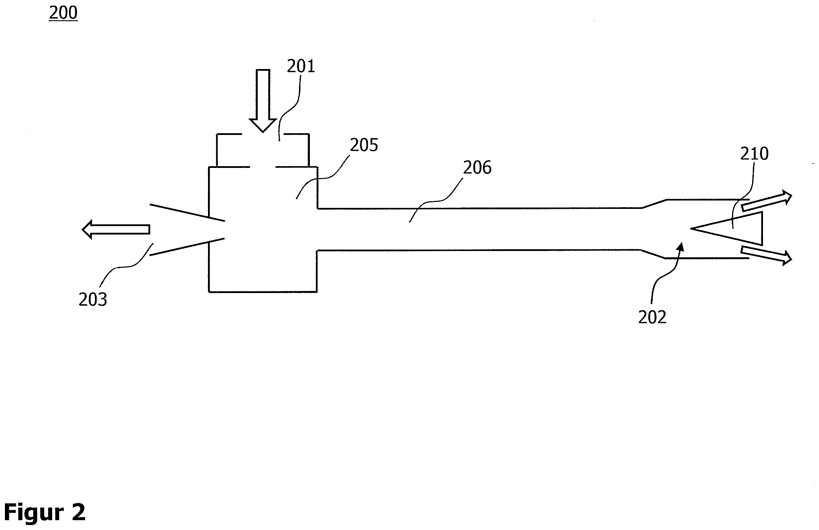

Figur 2 zeigt schematisch einen Längsschnitt durch ein Wirbelrohr 200. Das Wirbelrohr 200 weist einen Einlass 201 und zwei Auslässe 202 und 203 auf. Ein in den Einlass 201 einströmendes Gas wird in einer Kammer 205 so umgelenkt, dass es eine Wirbelströmung einnimmt, die sich durch das Längsrohr 206 in Richtung des ersten Auslasses 202 fortsetzt. An dem ersten Auslass 202 kann ein Ventil 210 vorgesehen sein, welches eine Durchflussmenge des Gases durch den ersten Auslass 202 einstellen kann.

In dem Wirbelrohr 200, insbesondere dem Längsrohr 206, wird warmes Gas nach außen (an die Innenwand des Längsrohrs 206) befördert, während kaltes Gas im Inneren des Längsrohrs 206 vorherrscht. Das kalte Gas wird im Inneren des Längsrohrs 206 zurück in die Kammer 205 und dort weiter zu dem zweiten Auslass 203 geleitet. Dabei können Temperaturunterschiede des Gases, welches an dem ersten Auslass 202 austritt und welches an dem zweiten Auslass 203 austritt, von ca. 30 bis 100 K auftreten. Beispielsweise kann ein Gas, welches über den Einlass 201 mit ca. 20 °C in das Wirbelrohr 200 eingeleitet wird, am ersten Auslass 202 mit ca. 50 °C austreten und am (gegenüberliegenden) zweiten Auslass 203 mit ca. -10 °C austreten.

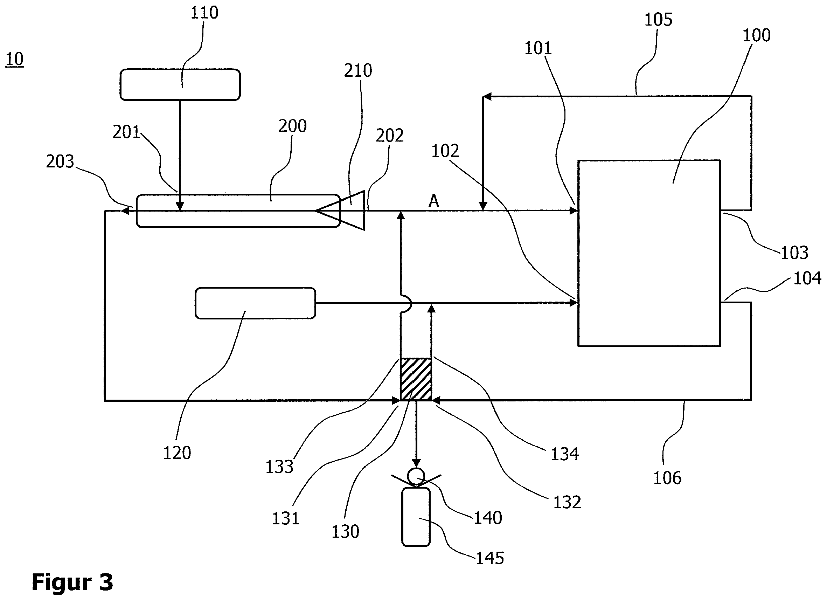

Figur 3 zeigt schematisch eine Brennstoffzellenanordnung 10 mit Kühlung eines Rezirkulationsgases. Die Brennstoffzellenanordnung 10 umfasst eine Brennstoffzelle 100 mit einem ersten Einlass 101 für einen Brennstoff und einem zweiten Einlass 102 für ein Oxidationsmittel. Ferner ist in der Brennstoffzellenanordnung 10 ein Wirbelrohr 200 vorgesehen, wie es in Figur 2 beschrieben ist. Dabei ist der erste Auslass 202 des Wirbelrohrs 200 mit dem ersten Einlass 101 der Brennstoffzelle 100 fluidisch verbunden. Eine fluidische Verbindung kann beispielsweise mit einer für den Brennstoff und/oder das Oxidationsmittel geeigneten Rohrleitung oder Schlauch hergestellt werden. Mit anderen Worten wird durch das Wirbelrohr 200 erwärmtes Gas dem ersten Einlass 101 der Brennstoffzelle 100 zugeführt.

Beispielsweise kann es sich bei dem dem Wirbelrohr 200 zugeführten Gas um einen Brennstoff (wie zum Beispiel Wasserstoff) der Brennstoffzelle 100 handeln, der in einem zugehörigen ersten Tank 110 unter Druck gelagert wird. Dieser erste Tank 110 ist mit dem Einlass 201 des Wirbelrohrs 200 fluidisch verbunden. Auch hier kann die fluidische Verbindung durch eine geeignete Rohrleitung oder Schlauch hergestellt werden. Das Wirbelrohr 200 teilt somit den Brennstoffstrom in einen erwärmten Gasstrom, der von dem ersten Auslass 202 des Wirbelrohrs 200 zu dem ersten Einlass 101 der Brennstoffzelle 100 geleitet wird, und einen gekühlten Gasstrom, der an dem zweiten Auslass 203 des Wirbelrohrs 200 austritt, auf.

Die Brennstoffzellenanordnung 10 weist ferner einen Wärmetauscher 130 mit einem ersten Einlass 131 auf, der wiederum mit dem zweiten Auslass 203 des Wirbelrohrs 200 fluidisch verbunden ist (beispielsweise mittels Rohrleitung oder Schlauch). Der Wärmetauscher 130 ist dazu eingerichtet, das über den ersten Einlass 131 ein strömende Gas mit einem über einen zweiten Einlass 132 des Wärmetauschers 130 ein strömenden Fluids thermisch zu koppeln. Eine thermische Kopplung erlaubt einen Übergang von Wärmeenergie von dem Gas zu dem Fluid oder umgekehrt, ohne das Gas und das Fluid zu vermischen.

In der in Figur 3 dargestellten Brennstoffzellenanordnung 10 tritt das am ersten Einlass 131 des Wärmetauschers 130 einströmende Gas nach der thermischen Kopplung mit dem Fluid an einem ersten Auslass 133 des Wärmetauschers 130 aus dem Wärmetauscher 130 aus. Hierbei ist der erste Auslass 133 des Wärmetauschers 130 mit dem ersten Einlass 101 der Brennstoffzelle 100 fluidisch gekoppelt. Beispielsweise kann das am ersten Auslass 133 des Wärmetauschers 130 ausströmende Gas über eine entsprechende Leitung (Rohr oder Schlauch) in eine Leitung eingeleitet werden, die den ersten Auslass 202 des Wirbelrohrs 200 mit dem ersten Einlass 101 der Brennstoffzelle 100 fluidisch verbindet. Dadurch wird das in dem Wirbelrohr in zwei unterschiedlich temperierte Ströme aufgeteilte Gas wieder zusammengeführt, wobei die Temperatur des Gases zwischen dem Einlass 201 des Wirbelrohrs und dem Leitungsabschnitt A zugenommen hat. Dies wird einerseits durch die Erwärmung im Wirbelrohr 200 und andererseits durch eine mögliche Wärmeaufnahme in dem Wärmetauscher 130 bewirkt. Beispielsweise kann die Temperatur des Gases in dem Leitungsabschnitt A zwischen 20 und 60 °C, vorzugsweise zwischen 30 und 50 °C, und besonders bevorzugt 40 °C betragen.

Der der Brennstoffzelle 100 über den ersten Einlass 101 zugeführte Brennstoff kann in mehr als ausreichender Menge zugeführt werden, wobei überschüssiger Brennstoff an einem ersten Auslass 103 der Brennstoffzelle 100 (auch Anodenauslass genannt) die Brennstoffzelle 100 wieder verlassen kann. Dabei ist der erste Auslass 103 mit dem ersten Einlass 101 der Brennstoffzelle 100 fluidisch verbunden. Beispielsweise kann eine Leitung 105 (Rohrleitung oder Schlauch) vorgesehen sein, der in eine Leitung mündet, die den ersten Auslass 202 des Wirbelrohrs 200 mit dem ersten Einlass 101 der Brennstoffzelle 100 fluidisch verbindet. Dadurch kann Brennstoff rezirkuliert werden und der Brennstoffzelle 100 erneut zugeführt werden. Dies erlaubt auch eine optimale Temperierung des Brennstoffs am ersten Einlass 101 der Brennstoffzelle 100. Beispielsweise verlässt der Brennstoff die Brennstoffzelle 100 an deren erstem Auslass 103 mit einer Temperatur von ca. 50 bis 90 °C, vorzugsweise 60 bis 80 °C, und besonders bevorzugt 70 °C. Der so temperierte Brennstoff vermischt sich mit dem in dem Leitungsabschnitt A strömenden Brennstoff, wodurch eine Temperatur des Brennstoffs am ersten Einlass 101 der Brennstoffzelle 100 von ca. 40 bis 80 °C, vorzugsweise 50 bis 70 °C, und besonders bevorzugt 60 °C erzielt wird.

Das zwischen dem ersten Einlass 131 und dem ersten Auslass 133 des Wärmetauschers 130 strömende Gas dient als Wärmesenke für jedes beliebige zu kühlende Fluid. So kann der Wärmetauscher 130 einen zweiten Einlass 132 sowie einen zweiten Auslass 134 aufweisen, wodurch ein Fluid durch den Wärmetauscher 130 geleitet werden kann und Wärmeenergie an das den Wärmetauscher 130 durchströmende Gas abgeben kann. Beispielsweise kann die Temperatur des an dem zweiten Auslass 203 des Wirbelrohrs 200 ausströmenden Gases eine Temperatur von ca. +10 bis -30 °C, vorzugsweise von 0 bis -20 °C, und besonders bevorzugt -10 °C aufweisen. Nach Aufnahme von Wärmeenergie in dem Wärmetauscher 130 kann das Gas am ersten Auslass 133 des Wärmetauschers 130 eine Temperatur von ca. 10 bis 50 °C, vorzugsweise 20 bis 40 °C und besonders bevorzugt von ca. 30 °C aufweisen.

Ferner kann die Brennstoffzelle 100 einen zweiten Einlass 102 für ein Oxidationsmittel und einen zweiten Auslass 104 (auch Kathodenauslass genannt) für überschüssiges Oxidationsmittel aufweisen. Der zweite Auslass 104 der Brennstoffzelle 100 kann mit dem zweiten Einlass 132 des Wärmetauschers 130 fluidisch verbunden sein, sodass das überschüssige Oxidationsmittel über eine entsprechende Leitung 106 (Rohrleitung oder Schlauch) in den Wärmetauscher 130 und durch diesen hindurch geleitet werden kann. Dabei weist das Oxidationsmittel am zweiten Auslass 104 der Brennstoffzelle 100 eine Temperatur auf, die der Temperatur des Brennstoffs am ersten Auslass 103 der Brennstoffzelle 100 entspricht. In dem Wärmetauscher 130 wird die Temperatur des Oxidationsmittels reduziert, beispielsweise auf ca. 10 bis 50 °C, vorzugsweise 20 bis 40 °C und besonders bevorzugt von ca. 30 °C. So kann das Oxidationsmittel in dem Wärmetauscher 130 am zweiten Auslass 134 die gleiche Temperatur aufweisen wie das an dem ersten Auslass 133 des Wärmetauschers 130 ausströmende Gas.

Ferner kann in dem Wärmetauscher 130 aufgrund der Abkühlung des Oxidationsmittels Wasser durch einen Wasserabscheider 140 abgeschieden werden. Der Wasserabscheider 140 ist in Figur 3 getrennt von dem Wärmetauscher 130 dargestellt, kann jedoch in den Wärmetauscher 130 integriert sein. Das aus dem Oxidationsmittel abgeschiedene Wasser kann in einem Sammelbehälter 145 aufgefangen werden. Das in dem Sammelbehälter 145 befindliche Wasser kann entweder entsorgt werden oder in einem regenerativen System (Siehe Figur 1) wiederverwendet werden.

Schließlich kann auch das Oxidationsmittel rezirkuliert werden, also der Brennstoffzelle 100 wieder zugeführt werden. In Figur 3 ist der zweite Auslass 134 des Wärmetauschers 130 mit dem zweiten Einlass 102 der Brennstoffzelle 100 fluidisch verbunden. So kann das durch den Wasserabscheider 140 und Wärmetauscher 130 getrocknete Oxidationsmittel aus Leitung 106 der Brennstoffzelle 100 wieder zugeführt werden. Zum Beispiel kann eine an dem zweiten Auslass 134 des Wärmetauschers 130 angeschlossene Leitung in eine Leitung münden, die einen Oxidationsmitteltank 120 mit dem zweiten Einlass 102 der Brennstoffzelle 100 fluidisch verbindet.

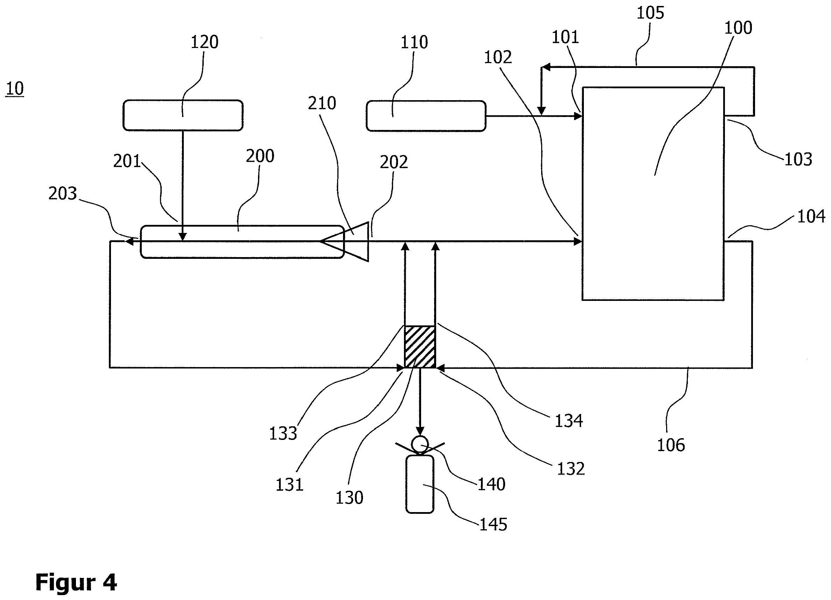

Figur 4 zeigt schematisch eine weitere Brennstoffzellenanordnung 10 mit Kühlung eines Rezirkulationsgases. Hierbei kann es sich bei dem Rezirkulationsgas entweder um rezirkuliertes Oxidationsmittel (wie in der Brennstoffzellenanordnung 10 aus Figur 3 sowie Figur 4 gezeigt) handeln. Alternativ kann auch rezirkulierter Brennstoff in dem Wärmetauscher 130 gekühlt und optional entfeuchtet werden.

Da in den beiden in den Figuren 3 und 4 gezeigten Brennstoffzellenanordnungen 10 die meisten Komponenten gleich und auch funktional identisch sind, werden nur die Unterschiede zwischen den Figuren 3 und 4 näher erläutert. So ist der Einlass 201 des Wirbelrohrs 200 mit dem Tank 120 für das Oxidationsmittel fluidisch verbunden, wonach das Oxidationsmittel in dem Wirbelrohr 200 in einen erwärmten (am ersten Auslass 202) und gekühlten (am zweiten Auslass 203) Oxidationsmittelstrom aufgeteilt wird. Der erste Auslass 202 des Wirbelrohrs 200 ist mit dem zweiten Einlass 102 der Brennstoffzelle 100 fluidisch gekoppelt. Ferner sind sowohl der erste Auslass 133 als auch der zweite Auslass 134 des Wärmetauschers 130 mit dem zweiten Einlass 102 der Brennstoffzelle 100 fluidisch gekoppelt. Beispielsweise münden jeweilige Leitungen, die mit dem ersten und zweiten Auslass 133, 134 des Wärmetauschers 130 verbunden sind, in eine Leitung, die den ersten Auslass 202 des Wirbelrohrs 200 mit dem zweiten Einlass 102 der Brennstoffzelle 100 fluidisch verbindet.

Der rezirkulierte Brennstoff aus Tank 110 wird weder gekühlt noch entfeuchtet. Somit ist der Tank 110 lediglich mit dem ersten Einlass 101 der Brennstoffzelle 100 fluidisch verbunden, während der erste Auslass 103 der Brennstoffzelle 100 ebenfalls mit dem ersten Einlass 101 der Brennstoffzelle 100 fluidisch verbunden ist (beispielsweise in eine den Tank 110 und die Brennstoffzelle 100 verbindende Leitung mündet).

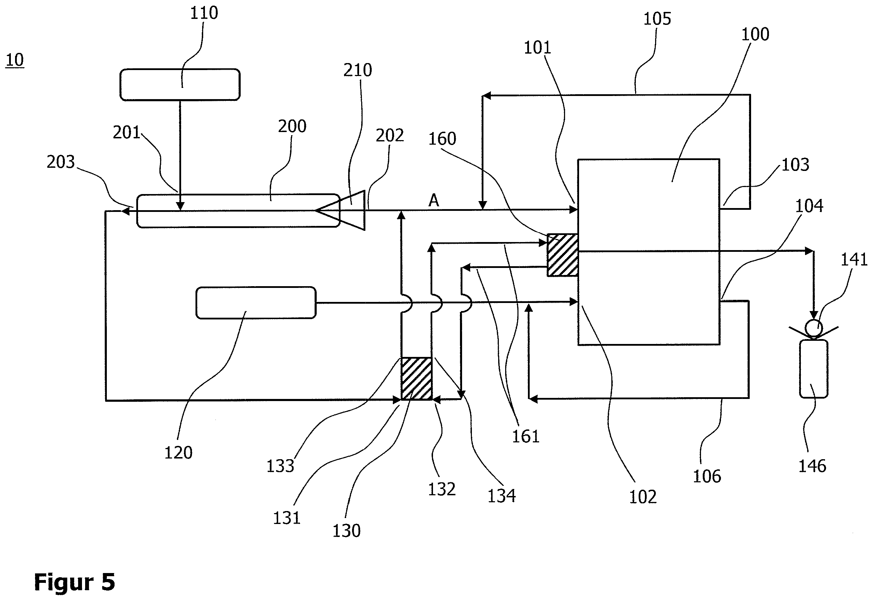

Figur 5 zeigt schematisch eine weitere Brennstoffzellenanordnung 10 mit Kühlung der Brennstoffzelle 100. Auch hier werden nur Unterschiede zu der Brennstoffzellenanordnung 10 aus Figur 3 näher erläutert. Im Unterschied zu der Brennstoffzellenanordnung 10 aus Figur 3 wird das Oxidationsmittel aus dem Tank 120 direkt rezirkuliert, ohne in dem Wärmetauscher 130 gekühlt und/oder entfeuchtet zu werden. Stattdessen ist eine Kühlanordnung 160 an oder in der Brennstoffzelle 100 vorgesehen. Die Kühlanordnung 160 ist an ein kühlmittelführendes Kühlsystem 161 angeschlossen. Das Kühlmittel in dem Kühlsystem 161 wird in dem Wärmetauscher 130 gekühlt und der Kühlanordnung 160 wieder zugeführt. Dabei kann das Kühlmittel in dem Kühlsystem 160 durch eine Fördereinrichtung (nicht dargestellt) zwischen Kühlanordnung 160 und Wärmetauscher 130 zirkulieren.

Als Wärmesenke dient hier mittels Wirbelrohr 200 gekühlter Brennstoff aus Tank 110 (wie in Figur 3). Ferner kann ein Wasserabscheider 141 vorgesehen sein, der in der Brennstoffzelle 100 entstehendes Wasser mithilfe der Kühlanordnung 160 kondensiert und abscheidet. Das Wasser kann in einem zugehörigen Sammelbehälter 146 aufgefangen werden.

Optional kann auch mittels Wirbelrohr 200 gekühltes Oxidationsmittel aus Tank 120 als Wärmesenke in dem Wärmetauscher 130 verwendet werden. Hierfür ist die Anordnung 10 in Figur 5 nur dahingehend abzuändern, dass die Tanks 110 und 120 oder der darin gelagerte Brennstoff bzw. Oxidationsmittel ausgetauscht werden.

Die in den Figuren 3 bis 5 dargestellten und beschriebenen Brennstoffzellenanordnungen 10 können selbstverständlich beliebig verändert oder miteinander kombiniert werden. So kann der Wärmetauscher 130 nicht nur zum Kühlen und Entfeuchten des Brennstoffs oder des Oxidationsmittel oder eines Kühlmittels verwendet werden. Vielmehr kann der Wärmetauscher 130 auch zum Kühlen und Entfeuchten des Brennstoffes und des Oxidationsmittels, oder des Brennstoffes und des Kühlmittels, oder des Oxidationsmittels und des Kühlmittels verwendet werden (diese Liste ist nicht abschließend zu verstehen). Beispielsweise kann mehr als ein Wirbelrohr 200 verwendet werden, um unterschiedliche Gase zu kühlen und als Wärmesenke zu verwenden. Ebenfalls kann auch ein einzelner Wärmetauscher 130 zum Kühlen mehrerer fluide (Gase) verwendet werden, beispielsweise durch die Vorsehung mehrerer thermisch gekoppelter Fluidleitungen durch den Wärmetauscher 130.

Ferner kann jede der in den Figuren 3 bis 5 dargestellten und beschriebenen Brennstoffzellenanordnung 10 sowie weitere Abwandlungen davon in einem Brennstoffzellensystem 1, wie es beispielsweise in Figur 1 gezeigt ist, eingesetzt werden. So kann die Kühlanordnung 160 (Figur 5) mit der Kühlanordnung 150 (Figur 1) übereinstimmen oder in diese integriert sein. Gleiches gilt für die Kühlsysteme 151 (Figur 1) und 161 (Figur 5) sowie die Wassersammelanordnung 170, 171, 175 (Figur 1) und Wasserabscheider 141 mit Wassersammelbehälter 146.

Dabei kann sämtliches abgeschiedenes Wasser in dem regenerativen Brennstoffzellensystem 1 aus Figur 1 wiederverwendet werden und durch den Elektrolyseur 300 wieder in Brennstoff und Oxidationsmittel aufgespalten werden.

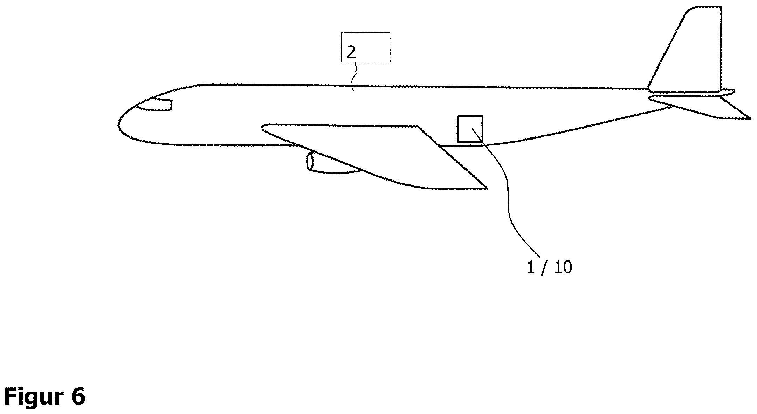

Figur 6 schließlich zeigt schematisch ein Fahrzeug 2 mit Brennstoffzellenanordnung 10. Obwohl als Fahrzeug 2 ein Flugzeug dargestellt ist, kann es sich bei dem Fahrzeug 2 selbstverständlich auch um ein Straßenfahrzeug, Schienenfahrzeug, Raumfahrzeug oder Satellit handeln. In jedem Fahrzeug und insbesondere bei einem Satelliten lässt sich ein Elektrolyseur 300 mit Solarzellen betreiben, um in einem regenerativen Brennstoffzellensystem 1 Brennstoff und Oxidationsmittel herzustellen.

Die in den Figuren 1 bis 6 beschriebenen Ausgestaltungen sollen die vorliegende Erfindung nicht einschränken. Vielmehr dienen sie lediglich dem Verständnis der Erfindung.

## Patentansprüche

1. Brennstoffzellenanordnung (10), umfassend:
- eine Brennstoffzelle (100) mit einem ersten Einlass (101) für einen Brennstoff und einen zweiten Einlass (102) für ein Oxidationsmittel;
**gekennzeichnet durch**
- einen ersten Tank (110) für den Brennstoff; und
- ein erstes Wirbelrohr (200) mit einem Einlass (201), einem ersten Auslass (202) für erwärmtes Gas und einem zweiten Auslass (203) für gekühltes Gas,
wobei der Einlass (201) des ersten Wirbelrohrs (200) mit dem ersten Tank (110) fluidisch verbunden ist, und wobei der erste Auslass (202) des ersten Wirbelrohrs (200) mit dem ersten Einlass (101) der Brennstoffzelle (100) fluidisch verbunden ist.

2. Brennstoffzellenanordnung (10) gemäß Anspruch 1, ferner umfassend:
- einen zweiten Tank (120) für das Oxidationsmittel; und
- ein zweites Wirbelrohr (200) mit einem Einlass (201), einem ersten Auslass (202) für erwärmtes Gas und einem zweiten Auslass (203) für gekühltes Gas,
wobei der Einlass (201) des zweiten Wirbelrohrs (200) mit dem zweiten Tank (120) fluidisch verbunden ist, und wobei der erste Auslass (202) des zweiten Wirbelrohrs (200) mit dem zweiten Einlass (101) der Brennstoffzelle (100) fluidisch verbunden ist.

3. Brennstoffzellenanordnung (10) gemäß Anspruch 1 oder 2, ferner umfassend:
- einen Wärmetauscher (130) mit einem ersten Einlass (131), der mit dem zweiten Auslass (203) des ersten Wirbelrohrs (200) fluidisch verbunden ist, und einen zweiten Einlass (132) für ein Fluid,
wobei der Wärmetauscher (130) dazu eingerichtet ist, das über den ersten Einlass (131) einströmende Gas mit dem über den zweiten Einlass (132) einströmenden Fluid thermisch zu koppeln.

4. Brennstoffzellenanordnung (10) gemäß Anspruch 3, wobei der Wärmetauscher (130) einen ersten Auslass (133) aufweist, aus dem das über den ersten Einlass (131) einströmende und mit dem Fluid thermisch gekoppelte Gas erwärmt austritt, und wobei der erste Auslass (133) des Wärmetauschers (130) mit einer von dem ersten Auslass (202) des ersten Wirbelrohrs (200) zu der Brennstoffzelle (100) führenden Leitung fluidisch verbunden ist.

5. Brennstoffzellenanordnung (10) gemäß Anspruch 3 oder 4, wobei der zweite Einlass (132) des Wärmetauschers (130) mit einem ersten Auslass (103) der Brennstoffzelle (100) für überschüssigen Brennstoff oder einem zweiten Auslass (104) der Brennstoffzelle (100) für überschüssiges Oxidationsmittel fluidisch verbunden ist.

6. Brennstoffzellenanordnung (10) gemäß Anspruch 5, ferner umfassend:
- einen Wasserabscheider (140), der dazu eingerichtet ist, Wasser aus dem über den zweiten Einlass (132) des Wärmetauschers (130) einströmenden überschüssigen Brennstoff oder überschüssigen Oxidationsmittel abzuscheiden; und
- einen Wassertank (145), der dazu eingerichtet ist, von dem Wasserabscheider (140) abgeschiedenes Wasser zu sammeln.

7. Brennstoffzellenanordnung (10) gemäß Anspruch 3 oder 4, wobei der zweite Einlass (132) des Wärmetauschers (130) mit einer Kühlanordnung (160) der Brennstoffzelle (100) fluidisch verbunden ist.

8. Regeneratives Brennstoffzellensystem (1), umfassend:
- eine Brennstoffzellenanordnung (10) gemäß einem der Ansprüche 1 bis 7;
- eine Wassersammelanordnung (170, 171, 175), die dazu eingerichtet ist, das bei der Energiegewinnung in der Brennstoffzelle (100) der Brennstoffzellenanordnung (10) anfallende Wasser zu sammeln; und
- ein Elektrolyseur (300), der dazu eingerichtet ist, eine Elektrolyse des durch die Wassersammelanordnung (170, 171, 175) gesammelten Wassers mittels elektrischen Stroms durchzuführen,
wobei der durch die Elektrolyse gewonnene Wasserstoff und Sauerstoff der Brennstoffzellenanordnung (10) zugeführt wird.

9. Fahrzeug (2) mit mindestens einer Brennstoffzellenanordnung (10) gemäß einem der Ansprüche 1 bis 7 oder mit mindestens einem regenerativen Brennstoffzellensystem (1) gemäß Anspruch 8.

## Claims

1. Fuel-cell arrangement (10) comprising:
- a fuel cell (100), which has a first inlet (101) for a fuel and a second inlet (102) for an oxidizing agent;
**characterized by**
- a first tank (110) for the fuel; and
- a first vortex tube (200), which has an inlet (201), a first outlet (202) for heated gas and a second outlet (203) for cooled gas,
wherein the inlet (201) of the first vortex tube (200) is fluidically connected to the first tank (110), and wherein the first outlet (202) of the first vortex tube (200) is fluidically connected to the first inlet (101) of the fuel cell (100).

2. Fuel-cell arrangement (10) according to Claim 1, furthermore comprising:
- a second tank (120) for the oxidizing agent, and
- a second vortex tube (200), which has an inlet (201), a first outlet (202) for heated gas and a second outlet (203) for cooled gas,
wherein the inlet (201) of the second vortex tube (200) is fluidically connected to the second tank (120), and wherein the first outlet (202) of the second vortex tube (200) is fluidically connected to the second inlet (101) of the fuel cell (100).

3. Fuel-cell arrangement (10) according to Claim 1 or 2, furthermore comprising:
- a heat exchanger (130), which has a first inlet (131) which is fluidically connected to the second outlet (203) of the first vortex tube (200), and has a second inlet (132) for a fluid,
wherein the heat exchanger (130) is designed such that it thermally couples the gas flowing in via the first inlet (131) with the fluid flowing in via the second inlet (132).

4. Fuel-cell arrangement (10) according to Claim 3, wherein the heat exchanger (130) has a first outlet (133) from which the gas flowing in via the first inlet (131) and thermally coupled with the fluid exits in a heated state, and wherein the first outlet (133) of the heat exchanger (130) is fluidically connected to a line leading from the first outlet (202) of the first vortex tube (200) to the fuel cell (100).

5. Fuel-cell arrangement (10) according to Claim 3 or 4, wherein the second inlet (132) of the heat exchanger (130) is fluidically connected to a first outlet (103) of the fuel cell (100) for surplus fuel or to a second outlet (104) of the fuel cell (100) for surplus oxidizing agent.

6. Fuel-cell arrangement (10) according to Claim 5, furthermore comprising:
- a water separator (140), which is designed to separate water off from the surplus fuel, or surplus oxidizing agent, which flows in via the second inlet (132) of the heat exchanger (130); and
- a water tank (145), which is designed to collect water separated off by the water separator (140).

7. Fuel-cell arrangement (10) according to Claim 3 or 4, wherein the second inlet (132) of the heat exchanger (130) is fluidically connected to a cooling arrangement (160) of the fuel cell (100).

8. Regenerative fuel-cell system (1) comprising:
- a fuel-cell arrangement (10) according to one of Claims 1 to 7;
- a water-collecting arrangement (170, 171, 175), which is designed to collect the water accumulating during the production of energy in the fuel cell (100) of the fuel-cell arrangement (10); and
- an electrolyzer (300), which is designed to carry out, by means of electric current, electrolysis of the water collected by way of the water-collecting arrangement (170, 171, 175),
wherein the hydrogen and oxygen produced by the electrolysis are supplied to the fuel-cell arrangement (10).

9. Vehicle (2) having at least one fuel-cell arrangement (10) according to one of Claims 1 to 7 or having at least one regenerative fuel-cell system (1) according to Claim 8.

## Revendications

1. Agencement de pile à combustible (10), comprenant :
- une pile à combustible (100) comportant une première entrée (101) pour un combustible et une deuxième entrée (102) pour un agent d'oxydation ;
**caractérisé par**
- un premier réservoir (110) pour le combustible ; et
- un premier tube à tourbillon (200) comportant une entrée (201), une première sortie (202) pour du gaz réchauffé et une deuxième sortie (203) pour du gaz refroidi, l'entrée (201) du premier tube à tourbillon (200) étant en liaison fluidique avec le premier réservoir (110), et la première sortie (202) du premier tube à tourbillon (200) étant en liaison fluidique avec la première entrée (101) de la pile à combustible (100).

2. Agencement de pile à combustible (10) selon la revendication 1, comprenant en outre :
- un deuxième réservoir (120) pour l'agent d'oxydation ; et
- un deuxième tube à tourbillon (200) comportant une entrée (201), une première sortie (202) pour du gaz réchauffé et une deuxième sortie (203) pour du gaz refroidi,
l'entrée (201) du deuxième tube à tourbillon (200) étant en liaison fluidique avec le deuxième réservoir (120), et la première sortie (202) du deuxième tube à tourbillon (200) étant en liaison fluidique avec la deuxième entrée (101) de la pile à combustible (100).

3. Agencement de pile à combustible (10) selon la revendication 1 ou 2, comprenant en outre :
- un échangeur de chaleur (130) comportant une première entrée (131) qui est en liaison fluidique avec la deuxième sortie (203) du premier tube à tourbillon (200), et une deuxième entrée (132) pour un fluide,
l'échangeur de chaleur (130) étant conçu pour coupler thermiquement le gaz affluant via la première entrée (131) avec le fluide affluant via la deuxième entrée (132).

4. Agencement de pile à combustible (10) selon la revendication 3, l'échangeur de chaleur (130) présentant une première sortie (133) hors de laquelle sort de manière réchauffée le gaz affluant via la première entrée (131) et couplé thermiquement au fluide, et la première sortie (133) de l'échangeur de chaleur (130) étant en liaison fluidique avec une conduite menant de la première sortie (202) du premier tube à tourbillon (200) à la pile à combustible (100).

5. Agencement de pile à combustible (10) selon la revendication 3 ou 4, la deuxième entrée (132) de l'échangeur de chaleur (130) étant en liaison fluidique avec une première sortie (103) de la pile à combustible (100) pour du combustible excédentaire ou avec une deuxième sortie (104) de la pile à combustible (100) pour de l'agent d'oxydation excédentaire.

6. Agencement de pile à combustible (10) selon la revendication 5, comprenant en outre :
- un séparateur d'eau (140) qui est conçu pour séparer l'eau du combustible excédentaire ou de l'agent d'oxydation excédentaire affluant via la deuxième entrée (132) de l'échangeur de chaleur (130) ; et
- un réservoir d'eau (145) qui est conçu pour collecter l'eau séparée par le séparateur d'eau (140).

7. Agencement de pile à combustible (10) selon la revendication 3 ou 4, la deuxième entrée (132) de l'échangeur de chaleur (130) étant en liaison fluidique avec un agencement de refroidissement (160) de la pile à combustible (100).

8. Système régénératif de pile à combustible (1), comprenant :
- un agencement de pile à combustible (10) selon l'une des revendications 1 à 7;
- un agencement de collecte d'eau (170, 171, 175) qui est conçu pour collecter l'eau produite dans la pile à combustible (100) de l'agencement de pile à combustible (10) lors de la récupération d'énergie ; et
- un électrolyseur (300) qui est conçu pour effectuer une électrolyse de l'eau collectée par l'agencement de collecte d'eau (170, 171, 175) au moyen d'un courant électrique,
l'hydrogène et l'oxygène obtenus par l'électrolyse étant acheminés à l'agencement de pile à combustible (10).

9. Véhicule (2) comportant au moins un agencement de pile à combustible (10) selon l'une des revendications 1 à 7 ou comportant au moins un système régénératif de pile à combustible (1) selon la revendication 8.
